# EUROPEAN PATENT SPECIFICATION

(11) **EP 0 429 409 B1**
(45) Date of publication and mention of the grant of the patent: **06.04.1994**
(21) Application number: 90830510.5
(22) Date of filing: 08.11.1990
(51) Int. Cl.: B01D 29/23, B01D 29/64, B01D 29/68, B01D 29/94

(54) **Self-cleaning filter for hydraulic systems fitted with an hydraulic turbine which operates a number of cleaning brushes**
Selbstreinigender Filter für hydraulische Systeme mit einem hydraulischen Turbinenantrieb für Reinigungsbürste
Filtre auto-nettoyant pour systèmes hydrauliques pourvu de brosses de nettoyage entraînés par une turbine hydraulique

(30) Priority: 24.11.1989 IT 65389
(43) Date of publication of application: 29.05.1991
(73) Proprietor: GEL - S.r.l., I-60022 Castelfidardo (AN) (IT)
(72) Inventor: Berto, Nazzareno, I-60022 Castelfidardo (AN) (IT); Ceccarelli, Fabio, I-60022 Castelfidardo (AN) (IT)
(74) Representative: Baldi, Claudio

(56) References cited:
- EP-A- 0 347 477
- WO-A-89/01816
- CH-A- 380 704
- DE-A- 2 140 349
- FR-A- 1 427 506
- US-A- 4 046 692

## Description

This invention relates to a self-cleaning water filter which self-washes in a counter-current by means of the scraping action of a number of rotating brushes, operated by a small turbine, which remove all the particles from the filter net.

This turbine is also used to generate jets of centrifuged water which efficiently clean the filtering surface which in fact undergoes a combined mechanical and hydrodynamic cleaning action.

It is a well known fact that water supplied either from the mains or from a well always contains a certain amount of impurity consisting of solid and colloidal particles, such as sand, slime, rust or lime which can create problems or damage to water supply systems.

In view of this, filters are commonly fitted before the supply mains. Generally these filters consist of containers housing the filtering cartridge made of fabric or synthetic or metal fine mesh net.

These filters can be subdivided into two categories according to the system used for cleaning the mesh when the cartridge is plugged by particles: manual filters and self-cleaning filters.

To clean the first type the operator must open the filter, wash the brushes and cartridge and sometimes even replace the cartridge with a new one.

Self-cleaning filters are specially constructed to automatically unplug the cartridge so that the same passes from the filtering phase to the self-cleaning phase and vice versa, simply by means of a switching device.

The automatic washing of the filtering cartridge in the majority of current self-cleaning filters available on the market is based on the counter-current principle which consists in reversing the water circulation flow within the filter so that the water itself removes the particles trapped in the fine mesh of the filtering cartridge.

The wash water containing the particles in suspension is drained through a special opening until the operating condition of the filtering cartridge is once again ideal.

The major problem related to this water cleaning system in a counter-current of water is that it is not completely efficient since once a section of the filtering surface has been unplugged sufficiently to be drained from the bottom of the cartridge container, the cleaning action stops leaving the remaining filtering surface soiled and plugged forming a layer of filtered particles which subsequently thickens and becomes compact creating an incrustation which is difficult to remove.

It has been experimentally proved that after a certain number of self-washing cycles, the permanently plugged filtering area becomes so wide that it compromises the capacity of the filter making it necessary to replace the cartridge.

The filter according to this invention has been designed to resolve these problems since the filter not only uses the traditional water cleaning system in a counter-current but is also fitted with a set of rotating brushes whose mechanical scraping action removes the particles which plug the mesh of the filtering surface over its entire surface.

A self-cleaning filter of this kind is described in patent CH-A 380704 concerning a filtering appliance for cleaning water, in particular that of swimming pools.

Patent CH-A 380704 describes a filter having filtering material consisting of numerous compressible elastic synthetic elements which can be mixed as required by means of several horizontal arms projecting radially from a vertical shaft which passes axially through the container of the filtering material.

The shaft is rotated by a manual lever and rotor consisting simply of a blade wheel which is struck by the incoming water when the filter operates against the current during the automatic washing cycle.

In the case of the self-cleaning filter described in this patent application the cleaning action performed by these rotating brushes is extremely efficient in that the same is combined to an energetic water cleaning action of a number of centrifuged water jets against the internal wall of the filtering surface which is scraped externally by the brushes.

The cleaning action performed by these rotating brushes is extremely efficient in that the same is combined to an energetic water cleaning action of a number of centrifuged water jets against the internal wall of the filtering surface which is scraped externally by the brushes.

In order to rotate the brushes outside the cartridge and the centrifugation nozzles of the wash water inside the cartridge, the device features a driving turbine operated automatically by the wash water as soon as the switching device strikes the water flow inside the filter to activate the self-cleaning phase.

According to the preferred embodiment of the invention, the filter according to the invention includes a head having the water input and output pipes as well as the above switching valve and a container in which the standard cylindrical filtering cartridge is housed.

The special feature of the device according to the invention is that the head is fitted with a turbine internally which is rotated by the wash water which a special distributor box pushes in a tangential direction with respect to the turbine so as to create a violent impact of the water jet against the blades of the turbine. The latter operates a vertical hollow shaft fitted under the same having radial ejector nozzles along its entire length from which the wash water can be centrifuged on the internal face of the filtering cartridge on whose external surface the impurities are deposited during normal filtering of the water which in normal working conditions passes through the cartridge from outside to inside.

The water cleaning action of the above centrifuged jets is combined to a mechanical scraping action by the bristles of a number of rotating brushes scratching against the external face of the filtering surface.

These brushes are supported along the outside edge by a cylindrical cage whose base bottom has a central boss which is keyed to the above shaft, driven by the turbine.

The high driving torque produced by the latter not only provides a high kinetic energy to the centrifuged water jets through the pairs of above nozzles but also an energetic and efficient scraping power to the brushes on the external face of the cartridge.

For the sake of major clarity the description of the invention continues with reference to the enclosed tables which are intended for purposes of illustration and not in a limiting sense where:
- fig. 1 is an axial plane cross-section of the self-cleaning filter according to the invention;
- fig. 2 is the cross-section of the filter illustrated in fig. 1 with transverse plane II-II;
- fig. 3 is the cross-section of the filter illustrated in fig. 1 with the transverse plane II-III;
- fig. 4 is a cross-section half-view of the above shaft and turbine;

With reference to the above figures the self-cleaning filter in question includes a head (1), a container (2) and a ring nut (3) for fixing the container (2) under the head (1).

The input (1a) and output (1b) pipes for the filtered water supplied to the system after the filter are fitted on the head (1) diametrically opposite each other.

Inside the head (1) there is a circular distributor box (4) which can oscillate around a vertical center axis; along the outside edge of the distributor box (4) there are two pipes (4a and 4b) which can be moved alternatively into position so that only one of these receives the water from the input pipe (1a) at a time.

The wide radial pipe (4a) conveys the incoming water into the container (2) below and drains it into the space between the walls outside the filtering cartridge (5), so that it is passed with a centripetal direction by the water, which firstly rises up into the cartridge and then is channeled into the output pipe (4c) of the distributor (4), after which there is the output pipe (1b) and is then introduced into the water system duly filtered.

The pipe (4b) is smaller and has a tangential shape since; it is used to give the water from the pipe (1a) a perpendicular direction with respect to the radial blades (6a) of the turbine (6) fitted at the center of the distributor box (4).

In the case of the latter, when the filter is operating during the self-cleaning phase, the water striking the blades (6a) falls immediately into a funnel below (7a) at the top of which there is a hollow shaft (7) along whose length there are opposing radial nozzles (7b) through which the wash water is centrifuged on the internal wall of the filtering surface of the cartridge (5) in that the shaft (7) extends vertically inside the latter which is screwed under the distributor box (4).

This hollow shaft (7) ends at the bottom with an end pin on which the bottom (8a) of a cylindrical cage (8) is keyed which supports a number of vertical brushes (8b) scraping on the external wall of the filtering surface of the cartridge (5).

Since the funnel (7a) of the hollow shaft (7) is flanged firmly under the turbine (6), when the latter is activated this gives rise to a combined cleaning action of the filtering surface, from inside by the centrifuged water jets from the nozzles (7b) and from outside by the scraping brushes (8b).

The wash water with impurities is drained through a special drain opening (2a) on the bottom of the container (2), which is normally closed by a valve (9), which can easily be opened from the outside by means of the knob (10) fitted above the head (1).

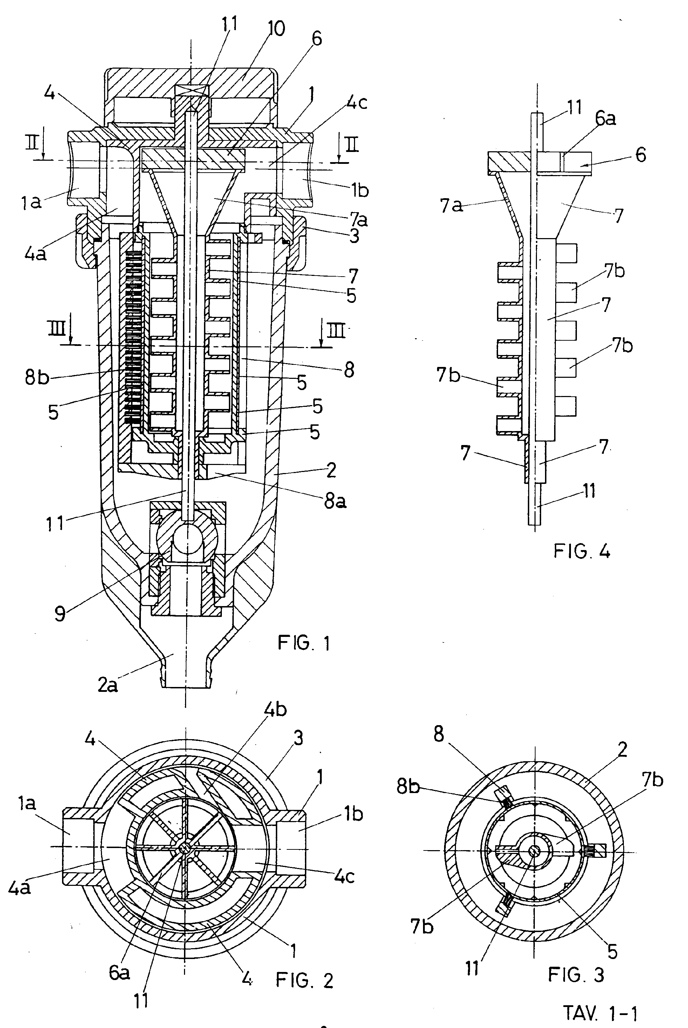

As can be seen in figure 1, the rotation of the knob causes the simultaneous rotation of the distributor box (4) in the same direction and of a vertical rod (11) which passes through the hollow shaft (7) to the bottom of the same and then connects on the valve (9). The conversion from filtering to self-cleaning operation can easily be carried out using the knob (10) above the head (1), which has two stop positions, one with which the water incoming from the pipe (1a) is channeled into the pipe (4a) of the distributor box (4) to then pass through the cartridge (5) from outside to inside and then rise up to the output pipe (1b), the other in which the water incoming from the pipe (1a) is channeled into the pipe (4b) of the distributor box (4) and then rotates the turbine (6), is centrifuged by the nozzles (8b), passes through the cartridge from inside to outside and is finally drained from the bottom of the container (2) passing through the bottom valve (9).

## Claims

1. A self-cleaning filter for hydraulic systems fitted with an hydraulic turbine which operates a number of cleaning brushes, of the type which includes a head (1), a container (2) and a ring nut (3) for fixing the container (2) under the head (1) having the input (1a) pipe for the water to be filtered and output (1b) pipe for the filtered water, in diametrically opposite position, characterized in that the container (a) contains a filtering cartridge; the head (1) houses a circular distributor box (4) which can rotate around a vertical axis, having two inlet pipes (4a and 4b) an a third outlet pipe (4c); the water to be filtered is introduced through the first inlet pipe (4b), having radial direction, and thereafter directed into the underlying container (2) outside the filtering cartridge, said water passes through the filtering cartridge into the inside of the same, the filtered water flows through the third outlet pipe (4c) having radial direction, towards outlet pipe (1b); the water for cleaning the filter is conveyed through the second inlet pipe (4b) having tangential direction, and directed against the radial blades (6a) of a turbine (6) housed in the distributor box (4) which rotates an underlying hollow shaft (7) having radial nozzles (7b) along its length and which terminates at the bottom of the container with a pin on which the bottom (8a) of a cylindrical cage (8) is keyed for supporting a number of vertical brushes (8b) which scrape against the external face of the filtering surface of the cartridge (5), the distributor box (4) can be turned by means of a knob (10) fitted above the head (1) which turns the circular distribution box (4) and thereby connects the input pipe (1a) with the second inlet pipe (4b), the turbine (6) rotates due to the tangentially incoming water accomplishing the simultaneously rotation of the radial nozzles (7b) for cleaning the inside of the filtering cartridge and the brushes (8b) for cleaning the outside of the filtering cartridge, and said head also turns the underlying rod (11) at the same time and in the same direction; said rod (11) passes through the hollow shaft (7) and comes out at the bottom and connects on valve (9) through which the wash water with the impurities can be drained through the special opening (2a) on the bottom of the container (2).

## Patentansprüche

1. Selbstreinigender Filter für die Wasserleitung, ausgestattet mit einer kleinen Hydraulikturbine zur Betätigung mehrerer Reinigungsbürsten, versehen mit einem Kopf (1), einem Gefäß (2) und einem Gewindering (3) zur Befestigung des Gefäßes (2) unterhalb des Kopfes (1), welcher auf der gegenüberliegenden Seite ein Rohr (1a) für den Einlauf des zu filternden Wassers sowie ein Rohr (1b) für den Auslauf des gefilterten Wassers aufweist, dadurch gekennzeichnet, daß das Gefäß (2) einen Filtereinsatz enthält; im Innern des Kopfes (1) befindet sich ein kreisförmiger Verteilerschieber (4), welcher sich um eine Vertikalachse drehen kann und zwei Einlaufrohre (4a und 4b) sowie ein Auslaufrohr (4c) besitzt; das zu filternde Wasser wird über das erste radial verlaufende Einlaufrohr (4a) eingeleitet und in das darunterliegende Gefäß außerhalb des Filtereinsatzes abgelassen; dieses Wasser läuft durch den Filtereinsatz und ergießt sich ins Innere desselben; über das dritte radial verlaufende Auslaufrohr (4c) wird das gefilterte Wasser in das Auslaufrohr (1b) geleitet; durch das zweite tangential verlaufende Einlaufrohr (4b) wird das Wasser zur Spülung des Filters gegen die Radialschaufeln (6a) einer im Verteilerschieber (4) befindlichen, über ihre gesamte Länge hinweg mit Spritzdüsen versehenen Turbine (6) gedrückt, die eine darunter befindliche Hohlwelle (7) ins Rotieren bringt und über ihre gesamte Höhe hinweg Radialdüsen (7b) aufweist und auf dem Boden des Gefäßes (2) in einem Stift endet, auf den der Boden (8a) eines Walzenständers (8) zur Halterung mehrerer Vertikalbürsten aufgepreßt ist, die an der Außenwand der Filterfläche des Einsatzes (5) entlangstreifen; der Verteilerschieber (4) kann mittels eines Griffes (10) gedreht werden, welcher sich oberhalb des Kopfes (1) befindet; dieser Griff (10) dreht den kreisförmigen Verteilerschieber (4) und verbindet auf diese Weise das Einlaufrohr (la) mit dem zweiten Einlaufrohr (4b); die Turbine (6) dreht sich dank des Tangentialeinlaufs des Wassers, das eine Simultanrotation sowohl der Radialdüsen (7b) zur Reinigung der Einsatzinnenfläche als auch der Bürsten (8b) zur Reinigung der Einsatzaußenfläche bewirkt; der besagte Griff (10) bewirkt außerdem eine gleichläufige Rotation der darunterliegenden Spindel (11), die nach Durchlaufen der Hohlwelle (7) unterhalb derselben hervortritt und im Ventil (9) einrastet, mit welchem das Verunreinigungen enthaltende Spülwasser über die dafür vorgesehene, auf dem Boden des Gefäßes (2) befindliche Tülle (2a) abgelassen werden kann.

## Revendications

1. Filtre autonettoyant pour installations hydriques, équipé de petite turbine hydraulique pour l'activation de quelques brosses nettoyeuses, du type comprenant une tête (1), un vase (2) et une frette de fixation (3) du vase (2) en-dessous de la tête (1) qui présente, en position diamétralement opposée, le conduit d'entrée (la) pour l'eau à filtrer et le conduit de sortie (lb) pour l'eau filtrée, caractérisé en ce que le vase (2) contient une cartouche filtrante; à l'interne de la tête (1) est niché un tiroir distributeur (4), circulaire, qui peut tourner autour d'un axe vertical et qui est pourvu de deux conduits d'entrée (4a et 4b) et d'un troisième conduit de sortie (4c); l'eau à filtrer étant introduite à travers le premier conduit d'entrée (4a) ayant direction radiale et ensuite déchargée dans le vase (2) sous-jacent en dehors de la cartouche filtrante, ladite eau traversant la cartouche filtrante et se déversant à l'interne de la cartouche; à travers le troisième conduit de sortie (4c) ayant direction radiale, l'eau filtrée est convoyée vers le conduit de sortie (1b); à travers le deuxième conduit d'entrée (4b) ayant direction tangentielle, l'eau avec laquelle effectuer le lavage du filtre est convoyée et adressée contre les palettes radiales (6a) d'une turbine (6) nichée dans le tiroir distributeur (4), ladite turbine entraînant en rotation un sous-jacent petit arbre cave (7) qui présente, sur toute sa hauteur, des gicleurs (7b) radiaux et qui est terminé sur le fond du vase (2) par un pivot sur lequel est embrevé le fond (8a) d'une cage cylindrique (8) de support pour quelques brosses verticales (8b), qui frottent sur la paroi externe de la surface filtrante de la cartouche (5); on peut tourner le tiroir distributeur (4) au moyen d'un bouton (10) positionné au-dessus de la tête (1); ce bouton (10) faisant tourner le tiroir de distribution circulaire (4) et raccordant ainsi le conduit d'entrée (la) avec le deuxième conduit d'entrée (4b), la turbine (6) pouvant tourner grâce à l'entrée tangentielle de l'eau qui détermine la rotation simultanée des gicleurs radiaux (7b) de nettoyage de la surface interne de la cartouche et des brosses (8b) de nettoyage pour la surface externe de la cartouche filtrante; ledit bouton (10) déterminant également la rotation simultanée et dans la même direction d'une sous-jacente tige (11) qui, après avoir traversé le petit arbre cave (7), en forjette inférieurement pour s'embrayer sur la soupape (9), à travers laquelle l'eau de lavage chargée d'impuretés peut être déchargée à travers un orifice (2a) prévu à cet effet et réalisé sur le fond du vase (2).
